# FASCICULE DE BREVET EUROPEEN

(11) **EP 1 299 704 B1**
(45) Date de publication et mention de la délivrance du brevet: **10.03.2010**
(21) Numéro de dépôt: 01984180.8
(22) Date de dépôt: 06.07.2001
(51) Int. Cl.: G01M 3/26

(54) **PROCEDE DE MESURE DE L'ETANCHEITE A L'AIR D'UN B TIMENT ET DU RESEAU DE VENTILATION MECANIQUE DE CELUI-CI ET DISPOSITIF POUR LA MISE EN OEUVRE DE CE PROCEDE**
VERFAHREN ZUR MESSUNG DER GEBÄUDEDICHTE UND EINES MECHANISCHEN VENTILATIONSSYSTEMS DAVON UND EINRICHTUNG DAFÜR
METHOD FOR MEASURING OF BUILDING TIGHTNESS AND OF A MECHANICAL VENTILATION SYSTEM THEREOF AND DEVICE THEREFOR

(30) Priorité: 12.07.2000 FR 0009142
(43) Date de publication de la demande: 09.04.2003
(73) Titulaire: ALDES AERAULIQUE, 69200 Venissieux Cedex (FR)
(72) Inventeur: NOUVEL, Jean-François, F-31330 Pechabou (FR); BOULANGER, Xavier, F-31460 Loubens Lauragais (FR)
(74) Mandataire: Maureau, Philippe
(86) Numéro de dépôt international: PCT/FR2001/002196
(87) Numéro de publication internationale: WO 2002/004912

(56) Documents cités:
- US-A- 4 363 236
- US-A- 4 420 969
- US-A- 4 517 826

## Description

La présente invention a pour objet un procédé de mesure de l'étanchéité à l'air d'un bâtiment et du réseau de ventilation mécanique de celui-ci, ainsi qu'un dispositif pour la mise en oeuvre de ce procédé.

La ventilation mécanique concerne de nombreux types de locaux, tels que des logements, des bureaux, des écoles, qu'il s'agisse de locaux neufs ou en rénovation, à caractère individuel ou collectif.

Il est connu depuis longtemps qu'il est nécessaire de ventiler les locaux pour différentes raisons, notamment la bonne conservation du bâtiment, l'évacuation des pollutions spécifiques liées à la présence des occupants, l'évacuation des pollutions spécifiques liées au bâtiment lui-même et l'évacuation des pollutions spécifiques liées au matériel ou machines utilisés dans ces locaux.

Toutefois, la maîtrise de cette ventilation est nécessaire pour limiter les déperditions thermiques liées au renouvellement d'air.

Différents types de ventilation mécanique sont actuellement proposés pour remplir les fonctions principales de ventilation définies précédemment.

Un premier système est un système à simple flux à extraction, caractérisé par un ensemble de composants permettant le balayage de l'air de l'extérieur vers les pièces de séjour, puis vers les pièces techniques, pour être extrait par des conduits et rejeté par un ventilateur vers l'extérieur.

Dans l'ordre de passage du flux d'air, on trouve successivement les composants suivants :
- des entrées d'air permettant l'introduction modulée ou non, à débit stabilisé ou non avec amortissement acoustique ou non, avec filtration de l'air ou non, dans les pièces de séjour,
- des passages de transit sous ou à travers les portes du local,
- des bouches d'extraction auto-régulées ou non, asservies ou non à un polluant, commandables ou non,
- un réseau de conduits d'extraction constitué de différents coudes, piquages et conduits aboutissant en une ou plusieurs branches à un ou plusieurs ventilateurs.

Il existe également un système à double flux, caractérisé par un ensemble de composants assurant non seulement le balayage de l'air de l'extérieur vers les pièces de séjour puis vers les pièces techniques pour être extrait par des conduits et rejeté par un ventilateur vers l'extérieur, mais assurant aussi l'insufflation par un ventilateur et un réseau de conduits et de bouches de diffusion d'un air extérieur éventuellement préparé et traité.

Dans l'ordre de passage du flux d'air se trouvent successivement les composants suivants :
- au moins un filtre,
- un dispositif de préchauffage et/ou de rafraîchissement,
- un ventilateur,
- un réseau de conduits isolés ou non,
- des grilles de diffusion dans les pièces de séjour,
- des passages de transit sous ou à travers les portes du local,
- des bouches d'extraction auto-régulées ou non asservies à un polluant ou non, commandables ou non,
- un réseau de conduits d'extraction constitué de différents coudes, piquages et conduits aboutissant en une ou plusieurs branches à un ou plusieurs ventilateurs.

Il est connu que la qualité des systèmes de ventilation et la maîtrise thermique dépendent fortement de la qualité du système et donc de tous ces composants. Cette qualité est de plus en plus surveillée avec des normes d'essais et des labels de certification. Toutefois, la surveillance de cette qualité ne doit pas être limitée aux composants que sont les entrées d'air, bouches d'extraction et ventilateur.

Les réseaux de conduits aérauliques d'extraction ou de soufflage nécessitant de nombreux assemblages, et l'enveloppe du bâtiment, ont eux aussi une très forte incidence sur le résultat. En effet, une mauvaise réalisation du bâtiment entraîne des perméabilités résiduelles. Cette fuite du bâtiment devient un parasite de la ventilation, susceptible d'apporter non seulement une très forte augmentation des pertes thermiques, en présence de vent par exemple, mais aussi une forte perturbation de la répartition de la ventilation pénalisant la bonne ventilation de certaines parties du bâtiment.

Il existe une technique ancienne permettant de mesurer l'étanchéité d'un local.

Cette technique consiste à remplacer la porte principale du local par une porte dite "fausse porte" comme décrit dans US 4,517,826 A, à travers laquelle passent des conduits reliés à un ventilateur et à des moyens de mesure. Le ventilateur doit être adapté au type de local dont l'étanchéité est à mesurer, puisqu'il est d'autant plus gros que les débits à mesurer sont importants. Il est nécessaire dans un tel cas d'obturer toutes les entrées d'air et bouches d'extraction afin de pouvoir mettre le local en dépression par l'extraction d'air à travers cette fausse porte. De la dépression mesurée sur le ventilateur est déduit le débit résultant des prises d'air du local.

Cette technique est longue et difficile à mettre en oeuvre, et ne tient pas compte de fuites éventuelles au niveau du réseau de ventilation.

Un autre dispositif connu comprend un ventilateur associé à des moyens de mesure de débit et de pression, installé momentanément dans le local dont l'étanchéité est à mesurer. La sortie du ventilateur est reliée au réseau de conduits existant pour la ventilation du local, ce réseau étant utilisé momentanément pour rejeter l'air vers l'extérieur. Les autres bouches d'extraction et les entrées d'air sont obturées.

Cette technique est plus simple que la précédente car ne nécessitant pas le remplacement de la porte principale.

Toutefois, cette technique comporte une limitation de débit liée au ventilateur "portable" devant être introduit dans le local ; il faudrait en effet autant de ventilateurs que de configurations de locaux. Il est parfois impossible d'effectuer une mesure si la perméabilité du logement est trop forte car le débit extrait peut être trop faible en raison des pertes de charge de refoulement. Un autre problème peut résulter de la mise en surpression du réseau d'extraction, qui peut amener l'air ailleurs qu'à l'orifice de refoulement dans le cas d'un immeuble collectif. Il existe une perte de temps et de mise en oeuvre qui est augmentée par la nécessité d'obturation des entrées d'air et des bouches d'extraction. Enfin, l'étanchéité du réseau de ventilation n'est pas mesurée.

Le but de l'invention est de fournir un procédé et un dispositif permettant de mesurer de façon simple et rapide, sans nécessiter la mise en oeuvre de moyens complexes, l'étanchéité à l'air d'un bâtiment et/ou du réseau de ventilation mécanique de celui-ci.

A cet effet, le procédé de mesure qu'elle concerne, destiné à mesurer l'étanchéité à l'air d'un bâtiment comportant au moins un local équipé d'au moins une entrée d'air et d'au moins une bouche d'extraction d'air reliée au réseau de ventilation équipé d'un ventilateur, consiste à obturer de façon étanche les entrées d'air de chaque local ainsi que les bouches d'extraction de chaque local, puis à faire fonctionner le ventilateur du réseau de ventilation mécanique en maintenant les bouches d'extraction obturées ou en enlevant ou en ouvrant au moins certaines des bouches et à mesurer à partir du ventilateur le débit extrait pour déterminer respectivement l'étanchéité du réseau de ventilation, l'étanchéité d'un local ou l'étanchéité du bâtiment.

Ce procédé est valable tant pour un système de ventilation à simple flux que pour un système de ventilation à double flux ; dans ce dernier cas, les bouches d'insufflation jouent le même rôle que les entrées d'air du premier cas.

Ce procédé met donc en oeuvre le dispositif de ventilation mécanique du bâtiment, permettant, sans nécessiter la présence d'un ventilateur spécifique, de réaliser la mesure de l'étanchéité à l'air d'une part du bâtiment et d'autre part du réseau de ventilation lui-même.

Il est possible de procéder à différents types de mesure.

Si toutes les entrées d'air et les bouches d'extraction des différents locaux appartenant au bâtiment sont obturées de façon étanche, la mise en fonctionnement du ventilateur d'extraction d'air permet de mesurer l'étanchéité du réseau d'extraction de la ventilation.

Si toutes les bouches de diffusion des différents locaux appartenant au bâtiment sont obturées de manière étanche, la mise en fonctionnement du ventilateur d'insufflation de l'air permet de mesurer l'étanchéité du réseau d'insufflation de la ventilation à double flux.

Pour procéder à la mesure de l'étanchéité d'un local, il convient d'ôter ou de retirer une bouche d'extraction dans le local considéré, les entrées d'air dans ce local et dans les autres locaux, de même que les bouches d'extraction d'air dans les autres locaux demeurant obturées. Le ventilateur est alors mis en fonctionnement pour mesurer l'étanchéité de ce local. Il doit être noté qu'il est possible de monter à des niveaux de dépression très élevés puisque l'on peut concentrer l'énergie du ventilateur sur un seul local. On n'a donc pas l'inconvénient d'une absence de mesure en cas de forte perméabilité d'un local.

Il est possible de procéder successivement à la mesure de l'étanchéité de plusieurs locaux, en ré-obturant les bouches des locaux qui ont déjà été mesurés, et qui avaient servi lors de cette mesure à la mise en dépression de ces locaux.

Pour procéder à la mesure globale de l'étanchéité d'un bâtiment, le ventilateur est mis en fonctionnement en ayant pris soin d'ôter toutes les bouches d'extraction d'air ou d'ouvrir toutes ces bouches, mais toujours avec des entrées d'air obturées.

Suivant un mode de mise en oeuvre, ce procédé consiste à mesurer le débit du ventilateur et la dépression du réseau ou du logement ou du bâtiment à mesurer.

Conformément à une première possibilité, le procédé selon l'invention consiste à mesurer directement le débit au rejet du ventilateur et la dépression du réseau ou du logement ou du bâtiment à mesurer.

Conformément à une autre possibilité, le procédé selon l'invention consiste à mesurer indirectement le débit par la mesure du courant consommé par le ventilateur et par la mesure de dépression générée par celui-ci, associé à la mesure de dépression du réseau ou du logement ou du bâtiment à mesurer".

Conformément à une troisième possibilité, le procédé selon l'invention consiste à mesurer indirectement le débit par la mesure de la vitesse de rotation du moto-ventilateur à courant continu et par la mesure de dépression générée par celui-ci, associé à la mesure de dépression du réseau ou du logement ou du bâtiment à mesurer.

Afin de parfaitement corréler les mesures et accroître la précision de celles-ci, le procédé selon l'invention consiste à effectuer plusieurs mesures pour différents régimes d'alimentation du ventilateur couvrant différents débits.

Suivant un dispositif pour la mise en oeuvre de ce procédé, les entrées d'air et les bouches d'extraction sont obturées en sortie de fabrication et installées dans le local à l'état obturé. Les entrées d'air et les bouches d'extraction étant obturées en sortie de fabrication et installées en l'état, la mesure de l'étanchéité du bâtiment est très rapide à réaliser puisque ne nécessitant pas d'intervention sur les bouches et sur les entrées d'air, sauf sur les bouches d'extraction servant à créer une dépression dans chaque local.

Selon une forme d'exécution de ce dispositif, les moyens d'obturation des entrées d'air et des bouches d'extraction sont constitués par des films auto-collants.

Suivant une forme d'exécution de ce dispositif, le groupe moto-ventilateur est équipé d'un débitmètre de mesure du rejet du ventilateur et d'un manomètre en amont du ventilateur, au niveau du conduit collecteur du ventilateur. Ces dispositifs de mesure peuvent être intégrés au groupe moto-ventilateur, afin de permettre un traitement immédiat des informations, ou rapportés momentanément dans celui-ci pour effectuer les opérations de mesure.

Suivant une autre forme d'exécution de ce dispositif, le groupe moto-ventilateur comporte un système de mesure du courant consommé ainsi qu'un manomètre en amont du ventilateur, au niveau du conduit collecteur du ventilateur. La mesure du courant consommé par le ventilateur, associée à une mesure de pression, permet de connaître parfaitement le débit véhiculé, étant donné les relations physiques entre l'énergie consommée, le rendement et l'énergie fournie par le ventilateur, celle-ci étant égale au débit que multiplie la dépression mesurée au niveau du ventilateur. Dans cette forme d'exécution, il est possible d'intégrer tous les composants dans le moto-ventilateur pour un faible surcoût, ce qui facilite encore la mise en oeuvre du procédé puisque tous les éléments nécessaires à la mesure sont présents dans l'installation.

Suivant une troisième forme d'exécution de ce dispositif, le groupe moto-ventilateur est un moteur à courant continu et comporte un système de mesure de vitesse de rotation intégré ainsi qu'un manomètre en amont du ventilateur, au niveau du conduit collecteur du ventilateur. La mesure de la vitesse de rotation, associée à la mesure de pression, permet de connaître parfaitement le débit véhiculé, étant donné les relations physiques entre le rendement de la roue du ventilateur et la dépression générée. Dans cette forme d'exécution, il est aussi possible d'intégrer tous ces composants dans le moto-ventilateur pour un faible surcoût.

Selon une autre caractéristique de ce dispositif, le moto-ventilateur est à courant continu et est équipé d'un commutateur électronique permettant l'obtention de différents régimes de fonctionnement. Cet agencement permet de corréler les mesures effectuées à différents régimes et d'améliorer la précision des mesures.

De toute façon, l'invention sera bien comprise à l'aide de la description qui suit, en référence au dessin schématique annexé représentant, à titre d'exemple non limitatif, une forme d'exécution d'un dispositif pour la mise en oeuvre de ce procédé.
Figure 1 est une vue très schématique d'un bâtiment comportant deux locaux, et équipé d'un dispositif de ventilation mécanique par extraction d'air, en situation de mesure de l'étanchéité du réseau.
Figure 2 est une vue similaire à celle de figure 1, en période de mesure de l'étanchéité d'un local.
Figure 3 est une vue en coupe longitudinale d'une bouche d'extraction d'air, équipée pour réaliser la mesure de l'étanchéité d'un local.

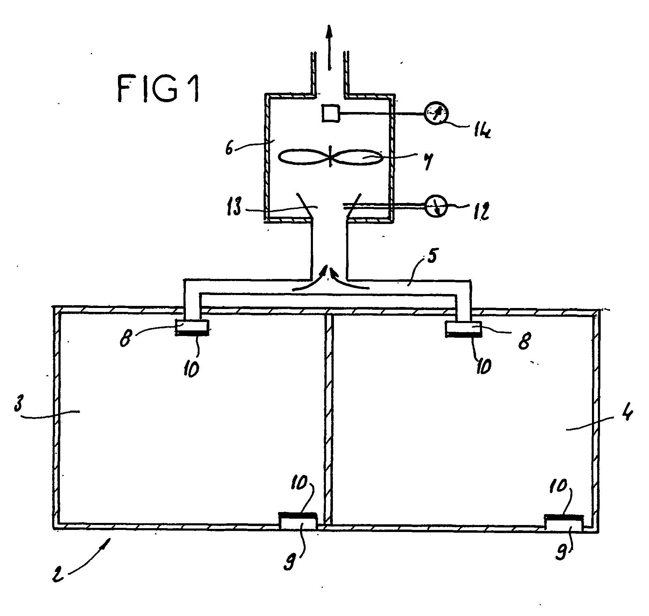

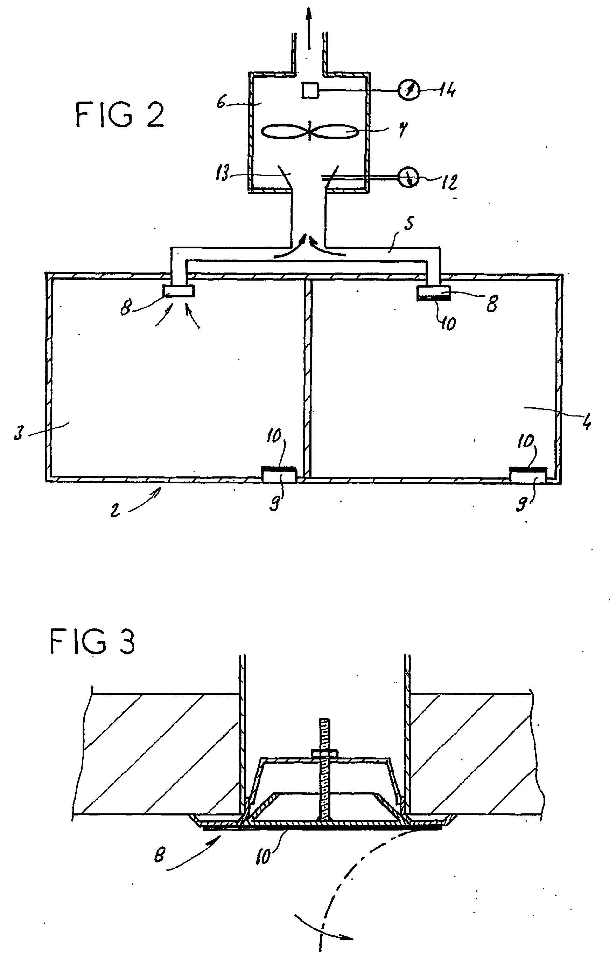

La figure 1 représente de façon très schématique un bâtiment 2 comportant deux locaux 3 et 4. Ce bâtiment est équipé d'un dispositif de ventilation mécanique comprenant un réseau 5 constitué par des conduits débouchant dans un caisson 6 contenant un moto-ventilateur 7. Ce moto-ventilateur sert à aspirer l'air des locaux 3 et 4 par l'intermédiaire de bouches 8, dont deux seulement sont représentées au dessin, une dans chaque local 3, 4. L'air est admis dans les locaux 3, 4 par l'intermédiaire d'entrées 9 qui peuvent par exemple admettre l'air depuis l'extérieur du bâtiment. Comme montré aux figures 1 à 3, les bouches 8 et entrées d'air 9 sont obturées lors de leur installation. Comme montré plus en détails à la figure 3, chaque bouche est obturée par un film auto-collant 10 qui peut être arraché simplement et rapidement comme montré dans la position représentée en pointillés. Il faut noter que le film 10 obturant chaque bouche 8 et chaque entrée 9 est un film étanche. Comme montré aux figures 1 et 2, le caisson de ventilation est équipé d'un manomètre 12 dans le conduit collecteur 13, en amont du ventilateur 7, et d'un débitmètre 14 disposé en aval du ventilateur.

Une mesure de l'étanchéité de l'air peut être réalisée de la façon suivante.

Dans le position représentée à la figure 1 dans laquelle les bouches 8 et entrées d'air 9 sont obturées de façon étanche, le moto-ventilateur 7 est mis en fonctionnement. Les mesures effectuées par le manomètre 12 et le débitmètre 14 permettent de déceler un débit éventuel résultant d'un défaut d'étanchéité sur le réseau et de quantifier l'importance de ce défaut d'étanchéité.

Il est ensuite possible, comme montré à la figure 2, de procéder à la mesure de l'étanchéité du local 3, après avoir enlevé le film de protection 10 qui obturait à l'origine la bouche 8 d'extraction située dans ce local 3. Il est alors procédé à une mesure dans les mêmes conditions que précédemment.

Afin d'isoler le débit de fuite du local 3, le débit mesuré par le débimètre 14 est corrigé de la valeur de débit de fuite du réseau sous la nouvelle dépression obtenue par le manomètre 12. Lorsque les fuites du local sont importantes, l'augmentation de la perte de charge du réseau lié à l'augmentation du débit pourrait perturber la mesure et nécessiter une prise de pression 15 complémentaire dans le local 3 considéré. Néanmoins, cette solution n'est qu'une version dégénérée de l'invention, car cette dépression peut être de fait recalculée par la multiplicité des mesures, les lois de pertes de charges et de perméabilité étant connues et invariables sur la plage de débit/pression considérée.

La bouche 8 située dans le local 3 étant rebouchée de façon étanche, il peut être procédé, après ouverture de la bouche située dans le local 4, à la mesure de l'étanchéité de ce second local.

Il peut enfin être procédé à la mesure de l'étanchéité globale du bâtiment en ouvrant les bouches 8 dans les deux locaux 3 et 4, tout en conservant les entrées d'air 9 obturées.

Comme il ressort de ce qui précède, l'invention apporte une grande amélioration à la technique existante en fournissant un procédé et un dispositif permettant de réaliser la mesure de l'étanchéité à l'air d'un bâtiment et du réseau de ventilation mécanique de celui-ci, de façon simple et rapide dans la mesure où ce procédé est mis en oeuvre à l'aide des composants de l'installation, et avec une grande fiabilité dans la mesure où la puissance du ventilateur mis en oeuvre peut permettre de mesurer des fuites d'air importantes en absolu.

Il va de soi qu'il existe pour les réseaux à simple flux d'insufflation la même logique de mesure , le ventilateur soufflant dans des conduits mis en dépression et les bouches d'insufflation jouant le rôle des bouches d'extraction.

## Revendications

1. Procédé de mesure de l'étanchéité à l'air d'un bâtiment et du réseau de ventilation mécanique de celui-ci, le bâtiment comportant au moins un local ou logement (3, 4) équipé d'au moins une entrée d'air (9) et d'au moins une bouche d'extraction d'air (8) reliée au réseau de ventilation (5) équipé d'un ventilateur (7), **caractérisé en ce qu'**il consiste à obturer de façon étanche les entrées d'air (9) de chaque local (3, 4) ainsi que les bouches d'extraction (8) de chaque local, puis à faire fonctionner le ventilateur (7) du réseau de ventilation mécanique en maintenant les bouches d'extraction (8) obturées ou en enlevant ou en ouvrant au moins certaines des bouches (8) et à mesurer à partir du ventilateur (7) le débit extrait pour déterminer respectivement l'étanchéité du réseau de ventilation, l'étanchéité d'un local ou l'étanchéité du bâtiment.

2. Procédé selon la revendication 1, **caractérisé en ce qu'**il consiste à mesurer le débit du ventilateur (7) et la dépression du réseau (5) ou du logement ou du bâtiment à mesurer.

3. Procédé selon la revendication 2, **caractérisé en ce qu'**il consiste à mesurer directement le débit au rejet du ventilateur (7) et la dépression du réseau (5) ou du logement ou du bâtiment à mesurer.

4. Procédé selon la revendication 2, **caractérisé en ce qu'**il consiste à mesurer indirectement le débit par la mesure du courant consommé par le ventilateur (7) et par la mesure de dépression générée par celui-ci, associé à la mesure de dépression du réseau ou du logement ou du bâtiment à mesurer.

5. Procédé selon la revendication 2, **caractérisé en ce qu'**il consiste à mesurer indirectement le débit par la mesure de la vitesse de rotation du moto-ventilateur à courant continu et par la mesure de dépression générée par celui-ci, associé à la mesure de dépression du réseau ou du logement ou du bâtiment à mesurer.

6. Procédé selon l'une des revendications 1 à 5, **caractérisé en ce qu'**il consiste à effectuer plusieurs mesures pour différents régimes d'alimentation du ventilateur couvrant différents débits.

7. Procédé selon l'une des revendications 1 à 6, **caractérisé en ce que** les entrées d'air (9) et les bouches d'extraction (8) sont obturées en sortie de fabrication et installées dans le local à l'état obturé.

8. Dispositif de mesure de l'étanchéité à l'air d'un bâtiment et du réseau de ventilation mécanique de celui-ci, comportant au moins une entrée d'air (9), destinée à équiper au moins un local ou logement du bâtiment, au moins une bouche d'extraction d'air (8), destinée à être reliée au réseau de ventilation, et un ventilateur (7), destiné à équiper le réseau de ventilation, **caractérisé en ce qu'**il comporte des moyens d'obturation des entrées d'air et des bouches d'extraction, le dispositif étant agencé pour obturer de façon étanche les entrées d'air (9) de chaque local (3,4) ainsi que les bouches d'extraction (8) de chaque local, puis faire fonctionner le ventilateur (7) du réseau de ventilation mécanique en maintenant les bouches d'extraction (8) obturées ou en enlevant ou en ouvrant au moins certaines des bouches (8), le dispositif comportant en outre des moyens de mesure de débit agencés pour mesurer à partir du ventilateur (7) le débit extrait, afin de déterminer respectivement l'étanchéité du réseau de ventilation, l'étanchéité d'un local ou l'étanchéité du bâtiment.

9. Dispositif selon la revendication 8, **caractérisé en ce que** les moyens d'obturation des entrées d'air (9) et des bouches d'extraction (8) sont constitués par des films autocollants(10).

10. Dispositif selon l'une des revendications 8 et 9, **caractérisé en ce qu'**il comporte un groupe moto-ventilateur (7) équipé d'un débitmètre (14) de mesure du rejet du ventilateur et d'un manomètre (12) en amont du ventilateur, au niveau d'un conduit collecteur (13) du ventilateur.

11. Dispositif selon l'une des revendications 8 à 10, **caractérisé en ce qu'**il comprend un groupe moto-ventilateur comportant un système de mesure du courant consommé ainsi qu'un manomètre en amont du ventilateur, au niveau d'un conduit collecteur du ventilateur.

12. Dispositif selon l'une des revendications 8 à 11, **caractérisé en ce que** le ventilateur est un moto-ventilateur à courant continu et est équipé d'un commutateur électronique permettant l'obtention de différents régimes de fonctionnement.

## Claims

1. Method for measuring the airtightness of a building and of the mechanical ventilation system of the latter, the building comprising at least one premises or lodging (3, 4) fitted with at least one air inlet (9) and at least one air extraction vent (8) connected to the ventilation system (5) fitted with a fan (7), **characterized in that** it consists in sealingly closing off the air inlets (9) of each premises (3, 4) and the extraction vents (8) of each premises, then in operating the fan (7) of the mechanical ventilation system and keeping the extraction vents (8) closed off or by removing or opening at least certain of the vents (8) and measuring from the fan (7) the extracted flow rate in order to determine respectively the airtightness of the ventilation system, the airtightness of a premises or the airtightness of the building.

2. Method according to Claim 1, **characterized in that** it consists in measuring the flow rate of the fan (7) and the pressure reduction of the system (5) or of the lodging or of the building to be measured.

3. Method according to Claim 2, **characterized in that** it consists in measuring directly the flow rate at the discharge of the fan (7) and the pressure reduction of the system (5) or of the lodging or of the building to be measured.

4. Method according to Claim 2, **characterized in that** it consists in measuring indirectly the flow rate by measuring the current consumed by the fan (7) and by measuring the pressure reduction generated by the latter, associated with measuring the pressure reduction of the system or of the lodging or of the building to be measured.

5. Method according to Claim 2, **characterized in that** it consists in measuring indirectly the flow rate by measuring the rotation speed of the direct current motor-driven fan and by measuring the pressure reduction generated by the latter, associated with measuring the pressure reduction of the system or of the lodging or of the building to be measured.

6. Method according to one of Claims 1 to 5, **characterized in that** it consists in taking several measurements for different supply speeds of the fan covering various flow rates.

7. Method according to one of Claims 1 to 6, **characterized in that** the air inlets (9) and the extraction vents (8) are closed off when leaving the factory and installed in the premises in the closed-off state.

8. Device for measuring the airtightness of a building and of the mechanical ventilation system of the latter, comprising at least one air inlet (9), designed to be fitted to at least one premises or lodging of the building, at least one air extraction vent (8), designed to be connected to the ventilation system, and a fan (7) designed to be fitted to the ventilation system, **characterized in that** it comprises means for closing off the air inlets and the extraction vents, the device being arranged to sealingly close off the air inlets (9) of each premises (3, 4) and the extraction vents (8) of each premises, then operating the fan (7) of the mechanical ventilation system and keeping the extraction vents (8) closed off or removing or opening at least certain of the vents (8), the device also comprising flow-rate measurement means arranged to measure from the fan (7) the extracted flow rate, in order to determine respectively the airtightness of the ventilation system, the airtightness of a premises or the airtightness of the building.

9. Device according to Claim 8, **characterized in that** the means for closing off the air inlets (9) and the extraction vents (8) consist of self-adhesive films (10).

10. Device according to one of Claims 8 and 9, **characterized in that** it comprises a motor-driven fan unit (7) fitted with a flowmeter (14) for measuring the discharge of the fan and a manometer (12) upstream of the fan, at a manifold duct (13) of the fan.

11. Device according to one of Claims 8 to 10, **characterized in that** it comprises a motor-driven fan unit comprising a system for measuring the current consumed and a manometer upstream of the fan, at a manifold duct of the fan.

12. Device according to one of Claims 8 to 11, **characterized in that** the fan is a direct-current motor-driven fan and is fitted with an electronic switch making it possible to obtain various operating speeds.

## Patentansprüche

1. Verfahren zur Messung der Luftdichtheit eines Gebäudes und dessen mechanischen Lüftungssystems, wobei das Gebäude mindestens einen Raum oder eine Wohnung (3, 4) umfasst, der bzw. die mit mindestens einem Lufteinlass (9) und mindestens einer Luftabzugsöffnung (8) versehen ist, die mit dem Lüftungssystem (5) verbunden ist, das mit einem Ventilator (7) versehen ist, **dadurch gekennzeichnet, dass** es aus folgenden Schritten besteht: dichtes Verschließen der Lufteinlässe (9) jedes Raums (3, 4) sowie der Abzugsöffnungen (8) jedes Raums, danach Inbetriebsetzen des Ventilators (7) des mechanischen Lüftungssystems, während die Abzugsöffnungen (8) verschlossen gehalten werden oder mindestens bestimmte der Öffnungen (8) entfernt oder geöffnet werden, und Messen des Abzugsdurchsatzes am Ventilator (7), um die Dichtheit des Lüftungssystems, die Dichtheit eines Raums bzw. die Dichtheit des Gebäudes zu messen.

2. Verfahren nach Anspruch 1, **dadurch gekennzeichnet, dass** es aus dem Messen des Durchsatzes des Ventilators (7) und des Druckabfalls im zu messenden System (5) oder Raum oder Gebäude besteht.

3. Verfahren nach Anspruch 2, **dadurch gekennzeichnet, dass** es aus dem direkten Messen des Durchsatzes am Ausblasausgang des Ventilators (7) und des Druckabfalls im zu messenden System (5) oder Raum oder Gebäude besteht.

4. Verfahren nach Anspruch 2, **dadurch gekennzeichnet, dass** es aus dem indirekten Messen des Durchsatzes durch das Messen des vom Ventilator (7) verbrauchten Stroms und durch das Messen des durch ihn erzeugten Druckabfalls, verknüpft mit dem Messen des Druckabfalls im zu messenden System oder Raum oder Gebäude besteht.

5. Verfahren nach Anspruch 2, **dadurch gekennzeichnet, dass** es aus dem indirekten Messen des Durchsatzes durch das Messen der Drehgeschwindigkeit des gleichstrommotorbetriebenen Ventilators und durch das Messen des durch ihn erzeugten Druckabfalls, verknüpft mit dem Messen des Druckabfalls im zu messenden System oder Raum oder Gebäude besteht.

6. Verfahren nach einem der Ansprüche 1 bis 5, **dadurch gekennzeichnet, dass** es aus der Durchführung mehrerer Messungen für unterschiedliche Speiseraten des Ventilators, die unterschiedliche Durchsätze abdecken, besteht.

7. Verfahren nach einem der Ansprüche 1 bis 6, **dadurch gekennzeichnet, dass** die Lufteinlässe (9) und die Abzugsöffnungen (8) ab Werk geschlossen sind und im Raum im geschlossenen Zustand installiert werden.

8. Vorrichtung zur Messung der Luftdichtheit eines Gebäudes und dessen mechanischen Lüftungssystems, die mindestens einen Lufteinlass (9), der dazu bestimmt ist, in mindestens einem Raum oder einer Wohnung des Gebäudes eingebaut zu werden, mindestens eine Luftabzugsöffnung (8), die dazu bestimmt ist, mit dem Lüftungssystem verbunden zu werden, und einen Ventilator (7), der dazu bestimmt ist, im Lüftungssystem eingebaut zu werden, umfasst, **dadurch gekennzeichnet, dass** sie Mittel zum Verschließen der Lufteinlässe und der Abzugsöffnungen umfasst, wobei die Vorrichtung zum dichten Verschließen der Lufteinlässe (9) jedes Raums (3, 4) sowie der Abzugsöffnungen (8) jedes Raums, danach Inbetriebsetzen des Ventilators (7) des mechanischen Lüftungssystems, während die Abzugsöffnungen (8) verschlossen gehalten werden oder mindestens bestimmte der Öffnungen (8) entfernt oder geöffnet werden, angeordnet ist, wobei die Vorrichtung ferner Durchsatzmessmittel umfasst, die zum Messen des Abzugsdurchsatzes am Ventilator (7) angeordnet sind, um die Dichtheit des Lüftungssystems, die Dichtheit eines Raums bzw. die Dichtheit des Gebäudes zu messen.

9. Vorrichtung nach Anspruch 8, **dadurch gekennzeichnet, dass** die Mittel zum Verschließen der Lufteinlässe (9) und der Abzugsöffnungen (8) aus Selbstklebefolien (10) bestehen.

10. Vorrichtung nach Anspruch 8 oder 9, **dadurch gekennzeichnet, dass** sie eine motorbetriebene Ventilatoreinheit (7) umfasst, die mit einem Durchsatzmesser (14) zum Messen des Ausblasausgangs des Ventilators und stromaufwärts des Ventilators an einem Sammelkanal (13) des Ventilators mit einem Manometer (12) versehen ist.

11. Vorrichtung nach einem der Ansprüche 8 bis 10, **dadurch gekennzeichnet, dass** sie eine motorbetriebene Ventilatoreinheit umfasst, die ein System zum Messen des Stromverbrauchs sowie ein Manometer stromaufwärts des Ventilators an einem Sammelkanal des Ventilators umfasst.

12. Vorrichtung nach einem der Ansprüche 8 bis 11, **dadurch gekennzeichnet, dass** es sich bei dem Ventilator um einen gleichstrommotorbetriebenen Ventilator handelt, der mit einem elektronischen Schalter versehen ist, mit dem verschiedene Betriebsgeschwindigkeiten erhalten werden können.
